# EUROPÄISCHE PATENTSCHRIFT

(11) **EP 1 894 702 B1**
(45) Veröffentlichungstag und Bekanntmachung des Hinweises auf die Patenterteilung: **13.05.2020**
(21) Anmeldenummer: 07014252.6
(22) Anmeldetag: 20.07.2007
(51) Int. Cl.: B29C 49/20, B60K 15/03, B29C 49/04, B29C 49/54, B29C 65/56

(54) **Verfahren zur Herstellung eines Kraftstoffbehälters**
Method for manufacturing a fuel container
Procédé destiné à la fabrication d'un récipient de combustible

(30) Priorität: 04.09.2006 DE 102006041837
(43) Veröffentlichungstag der Anmeldung: 05.03.2008
(73) Patentinhaber: Kautex Textron GmbH & Co. KG, 53229 Bonn (DE)
(72) Erfinder: Borchert, Matthias, 53179 Bonn (DE); Krämer, Timo, 57635 Hirz-Maulsbach (DE); Eulitz, Dirk, 53113 Bonn (DE); Lorenz, Harald, 53474 Bad Neuenahr-Ahrweiler (DE); Wolter, Gerd, 53639 Königswinter (DE)
(74) Vertreter: Richly & Ritschel Patentanwälte PartG mbB

(56) Entgegenhaltungen:
- EP-A- 1 211 196
- WO-A1-2006/045838
- DE-A1- 3 042 926
- DE-A1- 10 214 900
- DE-A1- 10 237 187
- FR-A1- 2 397 788
- JP-A- 2 070 421
- JP-A- 6 285 963
- JP-A- H02 113 919
- US-A- 3 917 109
- US-A- 4 952 347
- US-A- 5 103 865
- US-A- 5 514 323
- US-A1- 2002 130 515

## Beschreibung

Die Erfindung betrifft ein Verfahren zur Herstellung eines Behälters, insbesondere eines Kraftstoffbehälters aus thermoplastischem Kunststoff durch Extrusionsblasformen.

Kraftstoffbehälter aus thermoplastischem Kunststoff sollen grundsätzlich für Kohlenwasserstoffe impermeabel sein. Diese werden üblicherweise aus mehrschichtigen Coextrudaten hergestellt, die Barriereschichten für Kohlenwasserstoffe enthalten. Die für die Herstellung von Kunststoffkraftstoffbehältern verwendeten Kunststoffe, beispielsweise Polyethylen, sind grundsätzlich nicht diffusionsdicht für Kohlenwasserstoffe. Diese Kunststoffe neigen darüber hinaus zum Quellen in Gegenwart von Kraftstoff. Aus diesem Grund sind die bekannten Kraftstoffbehälter aus Kunststoff mit einer mehrschichtigen Wandung versehen, in die eine EVOH-Schicht als Barriere für Kohlenwasserstoffe eingebettet ist. Insoweit stellt die mangelnde Diffusionsdichtigkeit des verwendeten Grundmaterials kein Problem dar.

Üblicherweise werden Kraftstoffbehälter jedoch mit Einbauten versehen, diese weisen Be- und Entlüftungsleitungen sowie elektrische Anschlüsse auf. Zum Herstellen von Hindurchführungen durch die Tankwandung ist es bekannt, den fertigen Behälter mit Auskreisungen zu versehen, in die Anschlussnippel, Ventile oder dergleichen eingesetzt werden. Die Ventile, Ventilabdeckungen und Nippel werden mit der Außenwandung des Behälters die jeweilige Öffnung abdeckend verschweißt. Solche Verbindungsstellen an einem Kunststoffbehälter stellen potentiale Leckagestellen dar. Um Leckagepfade an Anschlüssen des Kraftstoffbehälters zu vermeiden, ist es bekannt, Anschlussnippel und Ventile als aufwändige Zweikomponentenbauteile herzustellen, wobei in der Regel diese Bauteile wenigstens einen Teil aus einem mit der Tankwandung verschweißbaren Kunststoff aufweisen, Funktionsteile an solchen Elementen hingegen regelmäßig aus Kunststoffen bestehen, die in Anwesenheit von Kraftstoff nicht quellen. Diese Kunststoffe (ABS, POM) sind meistens nicht mit den für die Tankwandung verwendeten Kunststoffen verschweißbar.

Häufig müssen Einbauten, Ventile und Anschlussnippel in einer manuellen Fertigungsstufe nach Fertigstellung des Behälters mit dem Behälter verbunden werden. Es ist beispielsweise bekannt, Teile von Ventilen auf der Innenseite der Tankwandung zu verrasten und auf der Außenseite mit Anschweißdeckeln, Anschweißnippeln oder dergleichen formschlüssig zu verbinden. Der Montageaufwand ist beträchtlich.

Ein Verfahren zur Herstellung eines Kraftstoffbehälters aus thermoplastischem Kunststoff sowie ein solcher Kraftstoffbehälter mit Anschlusselementen für Schläuche oder dergleichen ist aus der EP 1 211 196 A1 bekannt. Die EP 1 211 196 A1 beschreibt einen zweischaligen Kraftstoffbehälter aus thermoplastischem Kunststoff mit einer in die Behälterwandung eingebetteten Barriereschicht für Kohlenwasserstoffe, dessen zum Behälter zusammengefügte Schalen durch Thermoformen erhalten wurden. Um eine einfache Anbringung von Anschlusselementen unter Beibehaltung einer hohen Permeationsdichtigkeit für Kohlenwasserstoffe zu gewährleisten, wird in der EP 1 211 196 A1 ein zweiteiliges Anschlusselement bzw. ein zweiteiliger Fitting vorgeschlagen, der wenigstens ein Außenteil- und ein Innenteil umfasst, wobei das Aussenteil mit der Behälteraußenwandung verschweißt ist und das Innenteil das Außenteil unter Verdrängung und Zwischenlage der Behälterwandung zumindest teilweise durchsetzt. Diese Anordnung hat den Vorzug, dass die Behälterwandung so zwischen den Bauteilen eingeschlossen und verdrängt wird, dass das verdrängte Material als Abdichtung der Durchführung dient.

Eine solche Hindurchführung durch die Behälterwandung ist beim Thermoformen der Halbschalen des Behälters verhältnismäßig einfach herstellbar, schwieriger hingegen ist eine solche Verbindung bei der Herstellung des Kraftstoffbehälters durch Extrusionsblasformen zu realisieren.

**Ein Verfahren gemäß Oberbegriff von Anspruch 1 ist beispielsweise aus der** DE 102 37 187 A1 **bekannt. Diese Druckschrift betrifft einen Kraftstoffbehälter mit Netz, wobei das Netz in einem die Behälterwandung durchsetzenden Anschlussfitting an der Außenwandung des Behälters fixiert ist. Der Anschlussfitting wird mit einem Dorn durch den noch schmelzeheißen Vorformling während der Ausformung desselben im Werkzeug gestoßen. Auf der Innenwandung des fertigen Behälters wird der Anschlussfitting mit einem Konterring so verrastet, dass die beiden Teile, Konterring einerseits und Anschlussfitting andererseits die Behälterwand zwischen sich einschließen.**

**Aus der** US 5,103,865 **ist ein Verfahren zur Herstellung eines Kraftstoffbehälters bekannt, bei welchem ein Entlüftungsventil während der Ausformung des Kraftstoffbehälters in einem Blasformwerkzeug so angeordnet wird, dass das Ventilgehäuse mit seinem führenden Ende die Wandung des innerhalb des Blasformwerkzeugs aufgeweiteten Vorformlings durchstößt. Das Ventilgehäuse ist hierzu mit einer kreuzförmig ausgebildeten Schneidspitze versehen, die den Vorformling durchstößt und kreuzförmig einschneidet, derart, dass vier gleichgroße Materiallappen gebildet werden, die von dem durch die Behälterwand hindurchdringenden Ventilgehäuse beiseite geklappt werden.**

Der Erfindung liegt daher die Aufgabe zugrunde, ein Verfahren zur Herstellung eines Behälters, insbesondere eines Kraftstoffbehälters aus thermoplastischem Kunststoff bereitzustellen, mit welchem es möglich ist, Anschlusselemente während der Herstellung des Behälters mit möglichst einfachen Mitteln an diesem vorzusehen. Dabei sollen möglichst Leckagepfade für Kohlenwasserstoffe in der Wandung des Behälters vermieden werden bzw. auf ein Minimum beschränkt werden.

Erfindungsgemäß ist ein Verfahren zur Herstellung eines Behälters in dem Anspruch 1 definiert.

Das Verfahren gemäß der Erfindung hat den Vorzug, dass das oder die Anschlusselement(e) bei der Herstellung des Behälters noch in der ersten Hitze, d. h. noch im ursprünglich plastifizierten Zustand des Kunststoffs, mit dem Behälter verbunden werden. Die Verfahrensschritte Auskreisen von Öffnungen oder Abschneiden von verlorenen Blasköpfen und Anschweißen von Anbauteilen mittels Reibschweißen, Spiegelschweißen oder dergleichen entfallen. Die Verletzung der Behälterwandung durch das diese durchsetzende Anschlusselement ist auf ein Minimum beschränkt. Das Anschlusselement selbst wird als Mittel zum Durchstoßen der Behälterwandung verwendet und verbleibt als verlorener Formstempel in der Behälterwandung. Das Werkzeug dient dabei als Matrize oder Aufnahme bzw. als Widerlager für den durch die Wandung des Kraftstoffbehälters drückenden Teil des Anschlusselementes.

Als Werkzeug wird ein mehrteiliges Werkzeug, vorzugsweise ein Werkzeug mit Schieber, verwendet. Die Verwendung eines Werkzeugs mit Schieber bietet sich insbesondere dann an, wenn die von dem Anschlussstück erzeugte Ausstülpung der Behälterwandung eine profilierte Kontur bilden soll, die dann nur mittels eines solchen Werkzeugs entformbar ist.

Hierzu kann das Anschlusselement mit einer umlaufenden Schneidkante oder mit einer Pinole mit Nadelspitze versehen sein.

Bei dem Verfahren gemäß der Erfindung kann vorgesehen sein, dass der Behälter aus wenigstens zwei bahnförmig extrudierten Vorformlingen innerhalb eines dreiteiligen Werkzeugs mehrstufig umgeformt wird.

In diesem Fall ist es vorteilhaft, wenn das Anschlusselement auf der Innenseite des Behälters und das zugehörige Formteil auf der Außenseite des Behälters platziert werden.

Weiterhin wird ein Kraftstoffbehälter aus thermoplastischem Kunststoff bereitgestellt, mit wenigstens einem mit der Behälterwandung zumindest bereichsweise stoffschlüssig verbundenen Anschlusselement zur Verbindung mit aus dem Behälter hinaus oder in diesen hineinzuführenden Leitungen, wobei das Anschlusselement als einseitig die Behälterwandung durchsetzendes und diese ausstülpendes, verlorenes Formteil ausgebildet ist, die Ausstülpung ein einstückig mit der Behälterwandung ausgebildetes Passstück für eine Leitung oder einen Leitungsanschluss bildet und das Anschlusselement mit Mitteln zum Durchstoßen der Behälterwandung versehen ist. Das Anschlusselement kann als konischer oder zylindrischer Fitting ausgebildet sein, dessen Mantelfläche mit einem sogenannten "Tannenbaumprofil" versehen ist.

Darüber hinaus kann das Anschlusselement einen Fortsatz zum Durchstoßen der Behälterwandung aufweisen. Der Fortsatz des Anschlusselements kann pinolen- oder kanülenartig mit einer umlaufenden Schneidkante ausgebildet sein oder mit einer Nadelspitze versehen sein.

Die Erfindung wird nachstehend anhand eines in den Zeichnungen dargestellten Ausführungsbeispiels erläutert. Es zeigen:
- Figur 1: eine schematische Darstellung der Anordnung der zur Durchführung des Verfahrens benötigten Teile im Bereich der Behälterwandung,
- Figur 2: eine schematische Darstellung der Durchführung des Anschlusselements durch die Behälterwandung, wobei die Wandung des Behälters mit dem Anschlusselement durchstoßen wird,
- Figuren 3 und 4: die Entfernung des als Schieberwerkzeug ausgebildeten Werkzeugs von der Behälterwandung und die Entformung der Ausstülpung, und
- Figuren 5 bis 13: jeweils schematische Ansichten, die den Verfahrensablauf der Ausformung des Behälters in den verschiedenen Stufen darstellen.

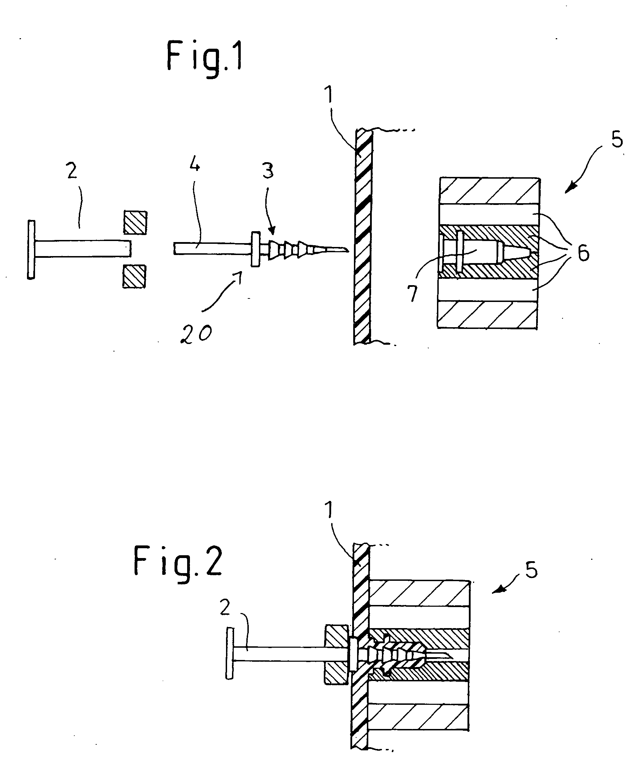

In Figur 1 ist mit 1 ein Abschnitt des Vorformlings des zu fertigenden Kraftstoffbehälters dargestellt. Der Vorformling 1 bildet in dem dargestellten Abschnitt bzw. Bereich die Wandung 19 des noch fertigzustellenden Behälters 10 aus.

Auf der linken Seite des Vorformlings 1 ist ein in dem noch zu beschreibenden Werkzeug (5) vorgesehener Greifer 2 angeordnet, der als Anschlusselement (20) einen Anschlusszapfen 3 mit einem daran angeschlossenen Leitungsabschnitt 4 aufnimmt. Auf der gegenüberliegenden Seite des Vorformlings 1 ist ein mehrteiliges Werkzeug 5 mit einem Schieber 6 angeordnet, welches einen Formhohlraum 7 ausbildet, der den Anschlusszapfen 3 aufnimmt und eine Kontur aufweist, die der späteren Kontur der Ausstülpung in der Behälterwandung entspricht. Das Werkzeug 5 kann als Bestandteil des später noch zu beschreibenden Blasformwerkzeugs ausgebildet sein, dieses kann aber auch separat in der Blasform angeordnet werden.

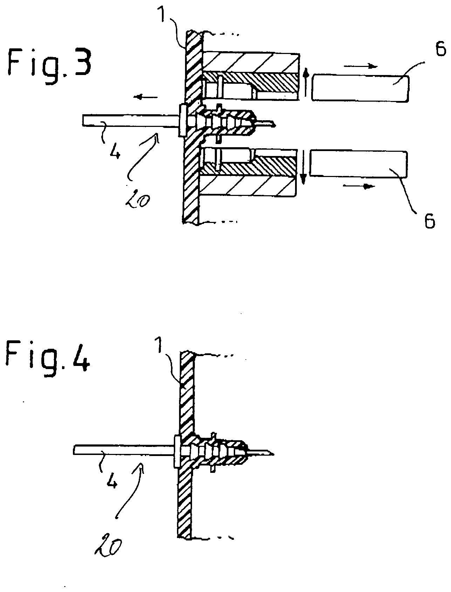

Aus der Zusammenschau der Figuren 1 bis 4 ist das Verfahrensprinzip der Anbringung des Anschlusselements an die Behälterwandung 19 zu entnehmen. Der mit 2 bezeichnete Greifer wird über einen Manipulator oder über einen Pneumatikzylinder oder dergleichen mit dem in dem Greifer 2 angeordneten Anschlusszapfen 3 in den Vorformling 1 gestoßen, wobei der Vorformling gegen das Werkzeug 5 anliegt und der Anschlusszapfen in den Hohlraum 7 des Werkzeugs 5 eindringt. Dabei wird das noch plastische Material des Vorformlings 1 mit dem Anschlusszapfen 3 als Formstempel in den Formhohlraum 7 verdrängt und dort umgeformt. Gleichzeitig umfließt das Material des Vorformlings 1 das tannenbaumartig ausgebildete Profil des Anschlusszapfens 3, wodurch zwischen dem Material des Vorformlings 1 und dem Anschlusszapfen 3 nach Erkalten des Materials ein Formschluss erzeugt wird.

Der Anschlusszapfen 3 ist mit einer Kanüle 9 versehen, die eine umlaufende Schneidkante aufweist. Bei Vorschub des Greifers 2 durchstößt die Kanüle 9 des Anschlusszapfens 3 den Vorformling 1, so dass der Anschlusszapfen 3 vollständig den Vorformling 1 bzw. die Wandung 19 des fertigen Behälters 10 durchsetzt. Dabei wird das thermoplastische Material der Wandung 19 in den Formhohlraum 7 verdrängt und umgeformt. Nach Einbringen des Anschlusszapfens 3 in den die Wandung 19 des Behälters bildenden Vorformling 1 wird der Greifer 2 zurückgefahren und der Schieber 6 wird aus dem Werkzeug 5 entfernt, so dass die beiden Teile des Werkzeugs geöffnet werden können.

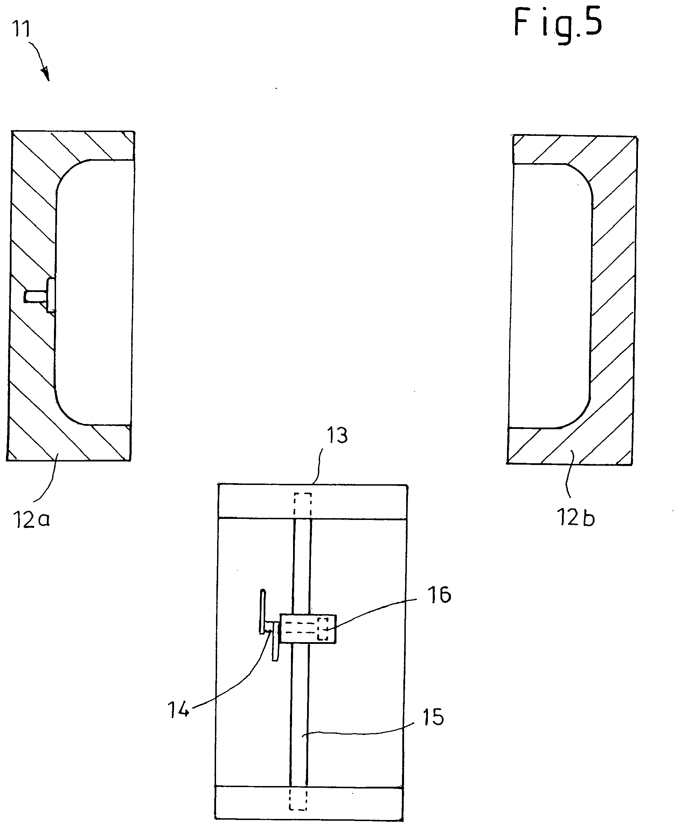

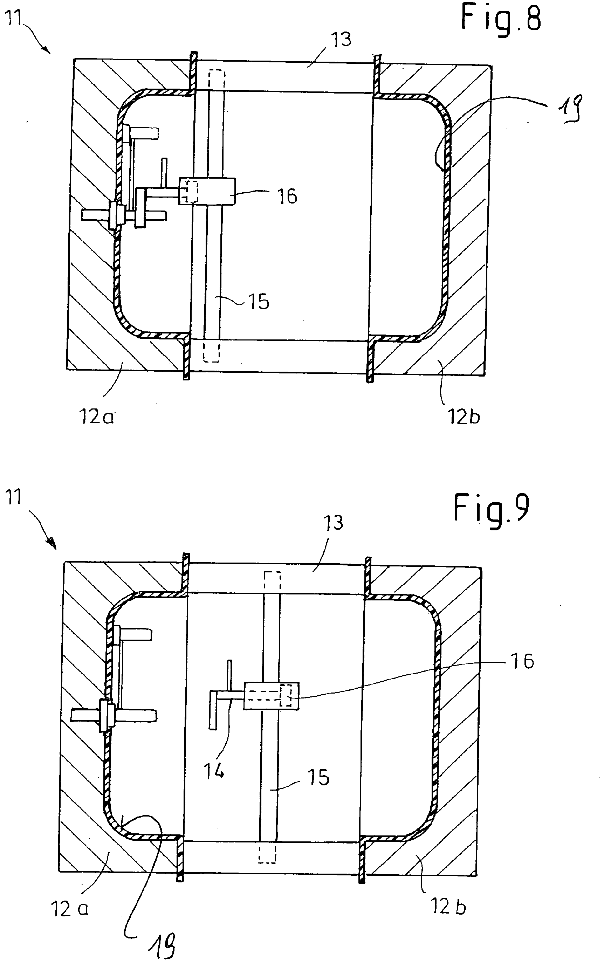

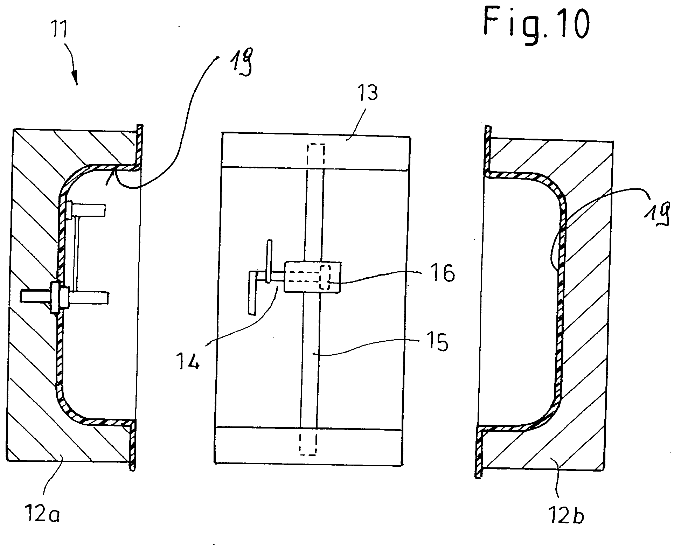

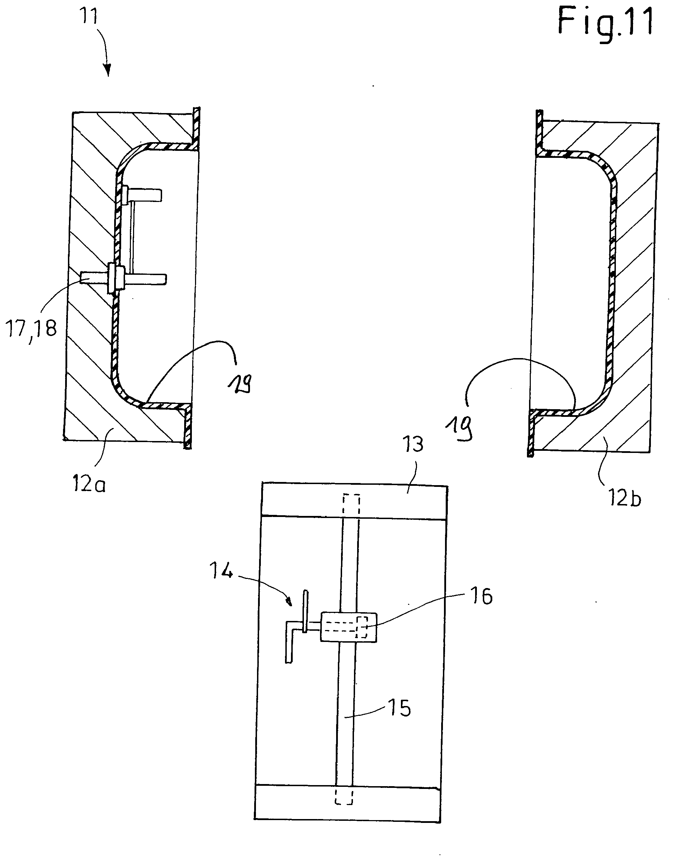

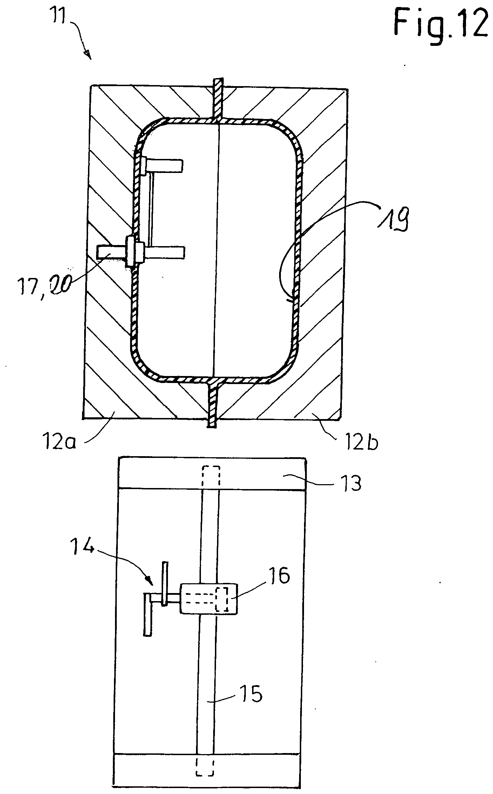

Das Herstellungsverfahren des Behälters 10 ist insbesondere den Figuren 5 bis 13 zu entnehmen. Diese Figuren zeigen der Reihe nach die verschiedenen Herstellungsschritte.

Der Behälter 10 wird, wie vorstehend bereits erwähnt, durch Extrusionsblasformen zweier bahnförmiger Vorformlinge 1 erhalten. Die Vorformlinge werden aus zwei in der Zeichnung nicht dargestellten Extrusionsköpfen mit Breitschlitzdüsen kontinuierlich extrudiert. Die nicht dargestellten Extrusionsköpfe sind in den Figuren 5 bis 13 oberhalb der Zeichnungsebene angeordnet. Die aus diesen austretenden Vorformlinge 1 werden zwischen die geöffneten Teile des Blaswerkzeugs 11 extrudiert, welches diese dann in dem nachstehend zu beschreibenden Prozess mehrstufig zu dem fertigen Behälter 10 umformt.

Das Blaswerkzeug 11 umfasst zwei Außenformen 12a, 12b und eine Mittelform 13, wobei die einzelnen Teile des Blaswerkzeugs 11 auf nicht dargestellten Formaufspannplatten montiert sind, die wiederum innerhalb eines nicht dargestellten Schließgestells verfahrbar sind. Die Außenformen 12a, 12b sind voneinander weg im Sinne einer Öffnungs- und Schließbewegung des Blaswerkzeugs 11 verfahrbar. Die Mittelform 13 ist quer zur Öffnungs- und Schließbewegung der Außenformen 12a, 12b verfahrbar.

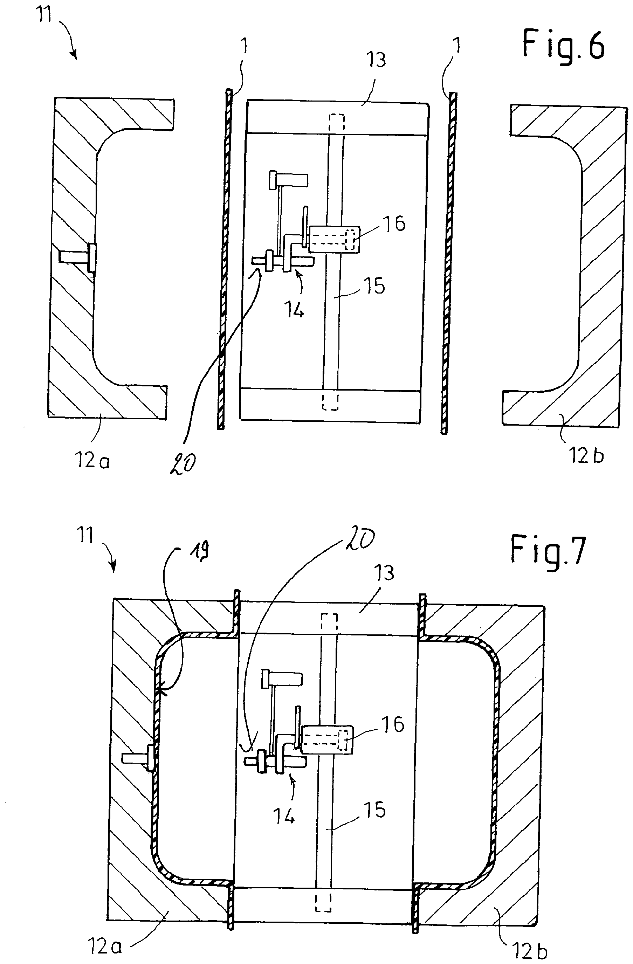

Wie in Figur 5 dargestellt, ist innerhalb der Mittelform 13 ein Bauteilhalter 14 auf einem verschiebbaren Träger 15 angeordnet. Der Bauteilhalter 14 wiederum ist mittels eines Pneumatikzylinders 16 verstellbar. In einem ersten in Figur 6 dargestellten Fertigungsschritt sind die Außenformen 12a, 12b zueinander geöffnet, die Mittelform 13 befindet sich außerhalb des Verstellweges der Außenformen 12a, 12b. In einem nächsten Verfahrensschritt wird der Bauteilhalter mit Tankeinbauten versehen, die beispielsweise ein Ventil mit einer Entlüftungsleitung und einem an der Entlüftungsleitung befestigten Anschlusszapfen 3 umfassen.

Die Mittelform 13 wird zwischen die Aussenformen 12a, 12b verfahren, anschließend werden die bahnförmigen Vorformlinge 1 aus den nicht dargestellten Extrusionsköpfen ausgestoßen und jeweils zwischen die Außenformen 12a, 12b und die Mittelform 13 abgelängt. Die Außenformen 12a, 12b werden bzgl. der Mittelform 13 geschlossen. Die Vorformlinge 1 werden mittels Gasdruckbeaufschlagung und/oder mittels außen angelegtem Vakuum in die Teilkavitäten 18a, 18b des Blaswerkzeugs 11 eingezogen oder eingedrückt.

In einem weiteren Schritt fährt der Träger 15 aus der Mittellage in Richtung auf die Außenform 12a, der Bauteilhalter 14 wird über den Pneumatikzylinder 16 in Richtung auf die Außenform 12a ausgestellt. Das auf diesem angeordnete Anschlussteil, beispielsweise der Anschlusszapfen 3, durchdringt den Vorformling 1 und wird in das mit 17 bezeichneten Werkzeug hineingedrückt. Dabei wird die Wandung 19 des Behälters 10 ausgestülpt und zu einem zapfenartigen Vorsprung umgeformt. Das Werkzeug 17 ist als Bestandteil des Blaswerkzeugs ausgebildet und in Figuren 5 bis 13 nur schematisch dargestellt.

Anschließend wird der Träger 15 wieder in seine Mittellage innerhalb der Mittelform 13 zurückgefahren, die Außenformen 12a, 12b öffnen sich, die Mittelform 13 wird zwischen den Außenformen 12a, 12b herausgefahren, die Außenformen 12a, 12b werden wiederum geschlossen, derart, dass die beiden in den Teilkavitäten 18a, 18b befindlichen Zwischenerzeugnisse zu dem fertigen Behälter 10 miteinander verschweißt werden. In dieser letzten Stufe des Verfahrens kann der Behälter 10 nochmals bei geschlossenen Außenformen 12a, 12b durch Gasdruckbeaufschlagung innerhalb des Formnestes aufgeweitet werden. Dieses würde dann in üblicher Art und Weise mit einem zwischen den Außenformen 12a, 12b befindlichen, nicht dargestellten Blasdorn erfolgen.

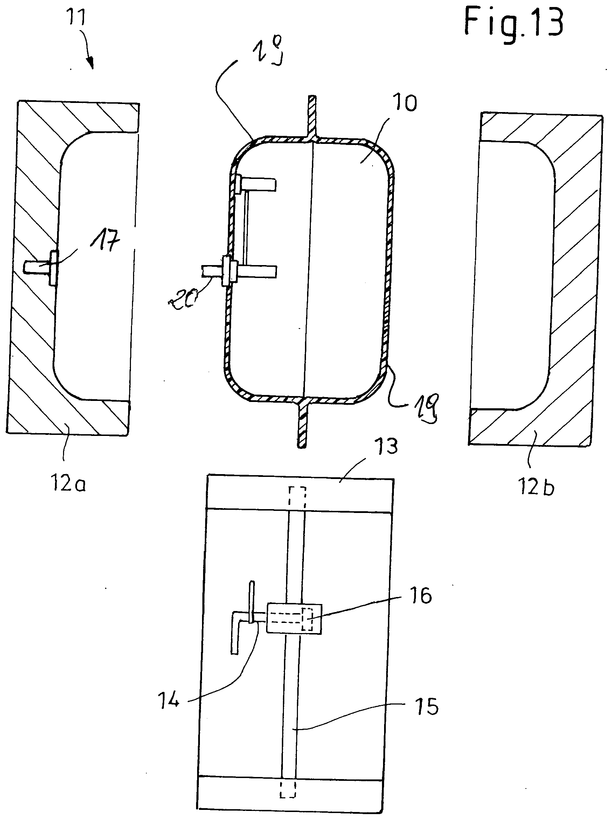

In Figur 13 ist schließlich die Entformung des fertigen Behälters 10 dargestellt.

### Bezugszeichenliste

- 1: Vorformling
- 2: Greifer
- 3: Anschlusszapfen
- 4: Leitungsabschnitt
- 5: Werkzeug
- 6: Schieber
- 7: Formhohlraum
- 9: Kanüle
- 10: Behälter
- 11: Blaswerkzeug
- 12a,12b: Außenformen
- 13: Mittelform
- 14: Bauteilhalter
- 15: Träger
- 16: Pneumatikzylinder
- 17: Werkzeug
- 18a,18b: Teilkavitäten
- 19: Wandung
- 20: Anschlusselement

## Patentansprüche

1. Verfahren zur Herstellung eines Behälters (10), insbesondere eines Kraftstoffbehälters aus thermoplastischem Kunststoff, durch Extrusionsblasformen, wobei der Behälter (10) während dessen Ausformung innerhalb eines mehrteiligen Werkzeugs (11) mit wenigstens einem dessen Wandung (19) durchsetzenden Anschlusselement versehen wird, wobei mit wenigstens einem Teil des Anschlusselements (20) als verlorener Formstempel die Wandung (19) des Behälters (10) von einer Seite in ein auf der gegenüberliegenden Seite der Behälterwandung (10) platziertes Werkzeug (5) verdrängt und umgeformt wird, wobei die Wandung (19) des Behälters (10) mit dem Anschlusselement (20) durchstoßen wird,
**dadurch gekennzeichnet, dass**
die Wandung (19) des Behälters (10) in dem Werkzeug (5) zu einer zapfenförmigen, vorzugsweise profilierten Ausstülpung oder Einstülpung umgeformt wird und,
dass als Werkzeug ein mehrteiliges Werkzeug (5) verwendet wird, welches als Matrize für den durch die Wandung (19) des Behälters (10) zu drückenden Teil des Anschlusselements dient.

2. Verfahren nach Anspruch 1, **dadurch gekennzeichnet, dass** als Werkzeug ein mehrteiliges Werkzeug (5) mit einem Schieber (6) verwendet wird.

3. Verfahren nach einem der Ansprüche 1 bis 2, **dadurch gekennzeichnet, dass** ein Anschlusselement mit einem dorn- oder pinolenförmig ausgebildeten Fortsatz mit einer Schneidkante oder ein Anschlusselement mit einer Nadelspitze Anwendung findet.

4. Verfahren nach einem der Ansprüche 1 bis 3, **dadurch gekennzeichnet, dass** der Behälter (10) aus wenigstens zwei bahnförmig extrudierten Vorformlingen (1) innerhalb eines dreiteiligen Werkzeugs (5) mehrstufig umgeformt wird.

5. Verfahren nach Anspruch 4, **dadurch gekennzeichnet, dass** das Anschlusselement (20) auf der Innenseite des Behälters (10) und das zugehörige Werkzeug (17) auf der Außenseite des Behälters (10) platziert werden.

## Claims

1. Method for producing a tank (10), in particular a fuel tank made of thermoplastic, by extrusion blow-moulding, wherein the tank (10), during forming thereof within a multi-part mould (11), is provided with at least one connection element which penetrates its wall (19), wherein at least one part of the connection element (20), as lost moulding punch, is used to displace the wall (19) of the tank (10) from one side into a mould (5) placed on the opposite side of the tank wall (10) and to shape it, wherein the wall (19) of the tank (10) is pierced by the connection element (20),
**characterized in that**
the wall (19) of the tank (10) is shaped in the mould (5) to form a plug-shaped, preferably profiled projection or inversion, and
**in that** the mould used is a multi-part mould (5) which serves as a female mould for that part of the connection element which is to be pressed through the wall (19) of the tank (10).

2. Method according to Claim 1, **characterized in that** the mould used is a multi-part mould (5) having a slide (6).

3. Method according to either of Claims 1 and 2, **characterized in that** a connection element having a mandrel- or quill-shaped extension with a cutting edge or a connection element having a needle tip is used.

4. Method according to one of Claims 1 to 3, **characterized in that** the tank (10) is shaped in multiple steps within a three-part mould (5) from at least two preforms (1) extruded in the form of sheets.

5. Method according to Claim 4, **characterized in that** the connection element (20) is placed on the inner side of the tank (10), and the associated mould (17) is placed on the outer side of the tank (10).

## Revendications

1. Procédé de fabrication d'un récipient (10), en particulier d'un récipient de carburant en matière plastique thermoplastique, par moulage par extrusion-soufflage, le récipient (10), pendant sa formation à l'intérieur d'un outil en plusieurs parties (11), étant muni d'au moins un élément de raccordement traversant sa paroi (19), la paroi (19) du récipient (10) étant repoussée et déformée depuis un côté dans un outil (5) placé sur le côté opposé de la paroi du récipient (10), avec au moins une partie de l'élément de raccordement (20) en tant que poinçon de formage perdu, la paroi (19) du récipient (10) étant percée avec l'élément de raccordement (20),
**caractérisé en ce que**
la paroi (19) du récipient (10) dans l'outil (5) est déformée pour obtenir un évasement vers l'extérieur ou vers l'intérieur en forme de tourillon, de préférence profilé, et
**en ce que** l'on utilise en tant qu'outil un outil en plusieurs parties (5) qui sert de matrice pour la partie de l'élément de raccordement devant être pressée à travers la paroi (19) du récipient (10).

2. Procédé selon la revendication 1, **caractérisé en ce que** l'on utilise en tant qu'outil un outil en plusieurs parties (5) avec un coulisseau (6).

3. Procédé selon l'une quelconque des revendications 1 et 2, **caractérisé en ce que** l'on utilise un élément de raccordement avec une saillie réalisée en forme de mandrin ou de douille avec une arête de coupe ou un élément de raccordement avec une pointe d'aiguille.

4. Procédé selon l'une quelconque des revendications 1 à 3, **caractérisé en ce que** le récipient (10) est façonné en plusieurs étapes à partir d'au moins deux préformes extrudées en forme de bande (1) à l'intérieur d'un outil en trois parties (5).

5. Procédé selon la revendication 4, **caractérisé en ce que** l'élément de raccordement (20) est placé sur le côté intérieur du récipient (10) et l'outil associé (17) est placé sur le côté extérieur du récipient (10).
